# EUROPEAN PATENT SPECIFICATION

(11) **EP 0 540 123 B1**
(45) Date of publication and mention of the grant of the patent: **12.06.1996**
(21) Application number: 92203334.5
(22) Date of filing: 29.10.1992
(51) Int. Cl.: B01J 29/08, C10G 47/16

(54) **Hydrocarbon conversion catalysts**
Kohlenwasserstoffumwandlungskatalysatoren
Catalyseurs de conversion d'hydrocarbures

(30) Priority: 01.11.1991 EP 91202861
(43) Date of publication of application: 05.05.1993
(73) Proprietor: SHELL INTERNATIONALE RESEARCH MAATSCHAPPIJ B.V., NL-2596 HR Den Haag (NL)
(72) Inventor: Van Veen, Johannes Anthonius Robert, NL-1031 CM Amsterdam (NL); Stork, Willem Hartman Jurriaan, NL-1031 CM Amsterdam (NL); Minderhoud, Johannes Kornelis, NL-1031 CM Amsterdam (NL)

(56) References cited:
- EP-A- 0 247 679
- US-A- 4 419 271

## Description

The present invention relates to hydrocarbon conversion processes and catalyst compositions which can suitably be used in such processes, in particular hydrocracking processes. The present invention also relates to compositions of matter suitable as catalyst base in hydroprocessing.

Of the many hydroconversion processes known in the art, hydrocracking is becoming increasingly important since it offers product flexibility together with product quality. As it is also possible to subject rather heavy feedstocks to hydrocracking it will be clear that much attention has been devoted to the development of hydrocracking catalysts.

Whereas in the past catalytic hydrocracking was aimed primarily at the production of lower boiling points products such as gasoline, nowadays hydrocracking is often aimed at meeting the increasing demand for high quality middle distillate products.

Therefore, the object in nowadays hydrocracking is to provide a hydrocracking catalyst having a high selectivity towards middle distillates and in addition a high activity and stability.

To this end modern hydrocracking catalysts are generally based on zeolitic materials which may have been adapted by techniques like ammonium-ion exchange and various forms of calcination in order to improve the performance of the hydrocracking catalysts based on such zeolitic materials.

One of the zeolites which is considered to be a good starting material for the manufacture of hydrocracking catalysts is the well-known synthetic zeolite Y as described in US-A-3,130,007. A number of modifications has been reported for this material which include, inter alia, ultrastable Y (US-A-3,536,605) and ultra-hydrophobic Y (GB-A-2,014,970). In general, it can be said that the modifications cause a reduction in the unit cell size depending on the treatment carried out.

EP-B-70,824, for instance, is directed to the application of hydrocracking catalysts comprising a specific type of ultrahydrophobic Y zeolites, in particular a zeolite known as LZ-10. Such hydrocracking catalysts contain apart from these specific zeolites having a characteristic water adsorption capacity of less than 8% by weight of zeolite, a dispersion of silica-alumina particles in a gamma-alumina matrix and a small amount of binder, if present at all. The type of catalyst described in EP-B-70,824 is claimed to constitute an improvement over the non-zeolitic catalyst comprising a similar dispersion as described in US-A-4,097,365.

Surprisingly, it has now been found that hydrocracking catalysts comprising a small amount of zeolite and a substantial amount of binder perform even more attractively in terms of selectivity and stability than the hydrocracking catalysts known so far, whilst substantially maintaining activity.

Accordingly, the present invention relates to a composition of matter suitable as catalyst base in hydroprocessing comprising a crystalline aluminosilicate of the zeolite Y type which comprises a modified Y zeolite having a unit cell size below 2.437 nm, a water adsorption capacity (at 25 °C and p/pₒ value of 0.2) of at least 8% by weight of modified zeolite and a pore volume of at least 0.25 ml/g wherein between 10% and 60% of the total pore volume is made up of pores having a diameter of at least 8 nm; an inorganic oxide binder selected from alumina, silica, magnesia, titania, clays, zirconia, silica-zirconia and silica-boria; and a dispersion of silica-alumina in an alumina matrix; wherein the composition comprises less than 25% by weight of the zeolite Y, more than 25% by weight of binder and at least 30% by weight of the dispersion.

Suitably, the composition of matter according to the present invention comprises at least 30% by weight of binder.

Preference is given to compositions of matter comprising less than 15% by weight of the zeolite Y.

Preferably, the composition of matter has a binder/zeolite Y weight ratio in the range of 2-40.

Suitably, the composition of matter according to the present invention comprises 40-70% by weight of the dispersion.

Suitably, the alumina matrix comprises a transitional alumina matrix, preferably a gamma-alumina matrix.

The compositions of matter in accordance with the present invention are particularly useful in certain hydroconversion processes, in particular hydrocracking processes.

The inorganic oxide binder present in the compositions of matter according to the present invention may be amorphous or crystalline.

Preferred binders are alumina, silica, silica-zirconia and silica-boria, more preferably alumina.

The composition of matter according to the present invention comprises a crystalline aluminosilicate comprising a modified Y zeolite having a unit cell size below 2.437 nm, a water adsorption capacity (at 25 °C and p/pₒ value of 0.2) of at least 8% by weight of modified zeolite and a pore volume of at least 0.25 ml/g wherein between 10% and 60% of the total pore volume is made up of pores having a diameter of at least 8 nm. A suitable type of such a modified Y zeolite has been described in detail in EP-B-247679.

Preferably, between 10% and 40% of the total pore volume of the modified Y zeolite is made up of pores having a diameter of at least 8 nm. Preferably, the modified Y zeolite has a unit cell size below 2.435 nm.

Suitably, the modified Y zeolite has a water adsorption capacity of 8-10% by weight of modified zeolite.

Preferably, the modified Y zeolite has a SiO₂/Al₂O₃ molar ratio of from 4 to 25, more preferably of from 8 to 15.

The present invention further relates to a catalyst composition comprising in addition to the composition of matter as defined hereinbefore at least one hydrogenation component of a Group VIB metal and/or at least one hydrogenation component of a Group VIII metal. Suitably, the catalyst composition according to the present invention comprises one or more components of nickel and/or cobalt and one or more components of molybdenum and/or tungsten or one or more components of platinum and/or palladium.

The amount(s) of hydrogenation component(s) in the catalyst composition suitably ranges between 0.05 and 10% by weight of Group VIII metal component(s) and between 2 and 40% by weight of Group VIB metal component(s), calculated as metal(s) per 100 parts by weight of total catalyst. The hydrogenation components in the catalyst composition may be in the oxidic and/or sulphidic form, in particular in the sulphidic form. If a combination of at least a Group VIB and a Group VIII metal component is present as (mixed) oxides, it will normally be subjected to a sulphiding treatment prior to proper use in hydrocracking. Suitably, the modified Y zeolite has a degree of crystallinity which is at least retained at increasing SiO₂/Al₂O₃ molar ratios.

The present invention also relates to a process for converting hydrocarbon oils into products of lower average molecular weight and lower average boiling point comprising contacting a hydrocarbon oil at elevated temperature and pressure in the presence of hydrogen with a catalyst composition as described hereinbefore.

Suitable process conditions for the hydroconversion process comprise temperatures between 250 and 500 °C, partial hydrogen pressures of up to 300 bar and space velocities between 0.1 and 10 kg feed per litre catalyst per hour (kg/l/hr). Gas/feed ratios between 100 and 5000 Nl/kg can suitably be applied. Preferably, the hydroconversion process is carried out at a temperature between 300 and 450 °C, a partial hydrogen pressure between 25 and 200 bar and a space velocity between 0.2 and 5 kg feed per litre catalyst per hour. Preferably, gas/feed ratios are applied between 250 and 2000 Nl/kg.

Feedstocks which can suitably be subjected to a hydroconversion process using a catalyst according to the present invention comprise gas oils, deasphalted oils, coker gas oils and other thermally cracked gas oils and syncrudes, optionally originating from tar sands, shale oils, residue upgrading processes or biomass. Combinations of various feedstocks can be applied.

It may be desirable to subject part or all of the feedstock to one or more (hydro)treatment steps prior to its use in the hydroconversion process. It is often convenient to subject the feedstock to a (partial) hydrotreatment. The catalyst to be applied in such a hydrotreatment is suitably an amorphous hydrocracking catalyst which contains at least one metal of Group VIB and/or at least one metal of Group VIII on an amorphous. In an attractive embodiment of such a hydrotreatment use is made of two reaction zones arranged in series whereby the complete effluent from the first reaction zone can be passed to the second reaction zone. The first reaction zone comprises a first amorphous hydrocracking catalyst as described hereinbefore and the second reaction zone comprises a second, zeolitic hydrocracking catalyst which contains at least one metal of Group VIB and/or at least one metal of Group VIII. Preferably, the zeolitic catalyst comprises a catalyst composition in accordance with the present invention. In this way a very attractive hydrotreatment of a feedstock is established. Therefore, the present invention also relates to a process for the hydrotreatment of a hydrocarbonaceous feedstock comprising contacting said feedstock in the presence of hydrogen with a first amorphous hydrocracking catalyst which contains at least one metal of Group VIB and/or at least one metal of Group VIII on an amorphous carrier in a first reaction zone passing at least part of the effluent from the first reaction zone, preferably the complete effluent, to a second reaction zone and contacting in the second reaction zone said effluent from the first reaction zone in the presence of hydrogen at elevated temperature and pressure with a second, zeolitic catalyst which comprises a crystalline alumino-silicate of the zeolite Y-type, a binder and a dispersion of silica-alumina in an alumina matrix, wherein the catalyst comprises less than 25% by weight of the zeolite Y, more than 25% by weight of binder and at least 30% by weight of the dispersion.

It is evident that the first reaction zone may comprise one or more beds of the alumina-containing catalyst and also the second reaction zone may contain one or more beds of the zeolite catalyst. It is also evident that the first and second reactor zone or zones may be located in one or more reactors. Preferably, the reaction zones are arranged in a stacked-bed configuration. Suitable hydrotreatment conditions include the reaction conditions mentioned in respect of the process according to the present invention. The hydrotreatment and the process according to the present invention can also suitably be carried out in reactors in series or in a stacked-bed configuration.

The reactor effluent so obtained can suitably be subjected to a further hydrocracking process, preferably to a process in accordance with the present invention.

The present invention will now be illustrated by means of the following Example.

### Example

### a) Preparation of a catalyst according to the present invention.

460 g of a commercially available modified Y zeolite having a unit cell size of 2.434 nm, a SiO₂/Al₂O₃ molar ratio of 9.3, a water adsorption capacity (at 25 °C and a p/p₀ value of 0.2) of 12.5% by weight and a nitrogen pore volume of 0.45 ml/g wherein 26% of the total pore volume is made up of pores having a diameter of at least 8 nm and a loss of ignition of 13% by weight was mixed with 8920 gram of an amorphous 45/55 silica-alumina (ex-Criterion) and 4110 g of hydrated aluminium oxide (ex-Criterion). To this mixture was added water and 500 g of acidic acid. After mulling, the mixture was further mixed with 300 g of extrusion aids. The resulting mixture was extruded and the extrudates obtained were dried whilst rotating for about 4 hours at 250 °C and calcined for 3 hours at 600 °C. The extrudates obtained had a water pore volume of 0.786 ml/g and a diameter of 1.65 mm. The ready catalyst support contained 4% by weight of modified Y zeolite, 30% by weight of binder and 66% by weight of the dispersion, on a dry basis.

A nickel/tungsten solution was made up containing 400 g of nickel nitrate solution (14% by weight of nickel) and 670 g of ammoniummetungstate (39.8% by weight of tungsten). The nickel/tungsten solution was diluted with water to 760 ml and used to impregnate 1 kg of the extrudates described hereinabove. After homogenizing the impregnated extrudates for 1 hour using a mixer, the extrudates were dried whilst rotating for about 4 hours at 250 °C and finally calcined at 450 °C for 2 hours. They contained 3.9% by weight of nickel and 18.9 % by weight of tungsten.

### b) Hydrocracking experiment.

The catalyst was subjected to a hydrocracking performance test involving a hydrotreated heavy vacuum gas oil having the following properties:

| | |
|---|---|
| C (%wt) | 86.28 |
| H (%wt) | 13.70 |
| S (ppm) | 79 |
| N (ppm) | 15 |
| d (70/4) | 0.8496 |
| pour point (°C) | 44 |
| I.B.P. (°C) | 344 |
| 10% wt rec. | 384 |
| 20% wt rec. | 412 |
| 30% wt rec. | 428 |
| 40% wt rec. | 446 |
| 50% wt rec. | 462 |
| 60% wt rec. | 483 |
| 70% wt rec. | 502 |
| 80% wt rec. | 526 |
| 90% wt rec. | 559 |
| F.B.P. | greater than 620 |

The catalyst was firstly subjected to a presulphiding treatment by slowly heating in a 5 %v H₂S/H₂-atmosphere to a temperature of 370 °C. The catalyst was tested in a 1:1 dilution with 0.1 mm SiC particles under the following operating conditions: WHSV of 1.5 kg/l/h, H₂S partial pressure of 2.5 bar, total pressure of 140 bar and a gas/feed ratio of 1500 Nl/kg. The experiment was carried out in once-through operation. The catalyst performance is expressed at 65 % by weight conversion of 370 °C⁺ boiling point material in the feed after allowing the catalyst to stabilize.

The following results were obtained with the catalyst:
Temperature required (65 % conv. of 370 °C⁺): 370 °C
Middle distillate selectivity (%wt) : 61
From the above results it will be clear that attractive results can be obtained with a catalyst containing a small amount of a zeolitic component and a large amount of binder. Also the catalyst was remarkably stable, in particular in respect of the large amount of binder present. Catalysts containing an amount of less than 25% by weight of binder are less selective and stable.

## Claims

1. Composition of matter suitable as catalyst base in hydroprocessing comprising a crystalline aluminosilicate of the zeolite Y type which comprises a modified Y zeolite having a unit cell size below 2.437 nm, a water adsorption capacity (at 25 °C and p/pₒ value of 0.2) of at least 8% by weight of modified zeolite and a pore volume of at least 0.25 ml/g wherein between 10% and 60% of the total pore volume is made up of pores having a diameter of at least 8 nm; an inorganic oxide binder selected from alumina, silica, magnesia, titania, clays, zirconia, silica-zirconia and silica-boria; and a dispersion of silica-alumina in an alumina matrix; wherein the composition comprises less than 25% by weight of the zeolite Y, more than 25% by weight of binder and at least 30% by weight of the dispersion.

2. Composition according to claim 1, wherein the composition comprises at least 30% by weight of binder.

3. Composition according to claim 1 or 2, wherein the composition comprises less than 15% by weight of the zeolite Y.

4. Composition according to claim 3, wherein the composition of matter has a binder/zeolite Y weight ratio of 2 to 40.

5. Composition according to any one of claims 1 to 4, wherein between 10% and 40% of the total pore volume of the modified Y zeolite is made up of pores having a diameter of at least 8 nm.

6. Composition according to any one of claims 1 to 5, wherein the modified Y zeolite has a unit cell size of below 2.435 nm.

7. Composition according to any one of claims 1 to 6, wherein the modified Y zeolite has a water adsorption capacity of 8-10% by weight of modified zeolite.

8. Composition according to any one of claims 1 to 7, wherein the modified Y zeolite has a SiO₂/Al₂O₃ molar ratio of from 4 to 25.

9. Catalyst composition comprising a composition of matter according to any one of claims 1 to 8 and at least one hydrogenation component of a Group VIB metal and/or at least one hydrogenation component of a Group VIII metal.

10. Catalyst composition according to claim 9, wherein the hydrogenation component comprises one or more components of nickel and/or cobalt and one or more components of molybdenum and/or tungsten or one or more components of platinum and/or palladium.

11. Process for converting hydrocarbon oils into products of lower average molecular weight and lower average boiling point comprising contacting a hydrocarbon oil at elevated temperature and pressure with hydrogen in the presence of a catalyst composition according to claim 9 or 10.

12. Process according to claim 11, which is carried out at a temperature in the range of from 250 °C to 500 °C, a hydrogen partial pressure up to 300 bar and a space velocity between 0.1 and 10 kg feed per litre of catalyst per hour.

## Patentansprüche

1. Eine als Katalysatorträger bei Hydrierverfahren geeignete Stoffzusammensetzung, enthaltend ein kristallines Alumosilikat vom Zeolith-Y-Typ, bei dem es sich um einen modifizierten Y-Zeolithen mit einer Elementarzellengröße unter 2,437 nm, einer Wasseraufnahmekapazität (bei 25°C und einem p/pₒ-Wert von 0,2) von mindestens 8 Gew.-% des modifizierten Zeolithen und einem Porenvolumen von mindestens 0,25 ml/g handelt, worin Poren mit einem Durchmesser von mindestens 8 nm 10% bis 60% des Gesamtporenvolumens ausmachen, ein unter Aluminiumoxid, Siliciumdioxid, Magnesiumoxid, Titandioxid, Tonen, Zirkoniumdioxid, Siliciumdioxid-Zirkoniumdioxid und Siliciumdioxid-Boroxid ausgewähltes anorganisches Oxid als Bindemittel sowie eine Dispersion von Siliciumdioxid-Aluminiumoxid in einer Aluminiumoxid-Matrix, wobei die Zusammensetzung weniger als 25 Gew.-% Y-Zeolith, mehr als 25 Gew.-% Bindemittel und mindestens 30 Gew.-% der Dispersion enthält.

2. Zusammensetzung nach Anspruch 1, die mindestens 30 Gew.-% Bindemittel enthält.

3. Zusammensetzung nach Anspruch 1 oder 2, die weniger als 15 Gew.-% Y-Zeolith enthält.

4. Zusammensetzung nach Anspruch 3, wobei die Stoffzusammensetzung ein Gewichtsverhältnis von Bindemittel zu Y-Zeolith von 2 bis 40 aufweist.

5. Zusammensetzung nach einem der Ansprüche 1 bis 4, worin Poren mit einem Durchmesser von mindestens 8 nm 10% bis 40% des Gesamtporenvolumens des modifizierten Y-Zeolithen ausmachen.

6. Zusammensetzung nach einem der Ansprüche 1 bis 5, worin der modifizierte Y-Zeolith eine Elementarzellengröße unter 2,435 nm aufweist.

7. Zusammensetzung nach einem der Ansprüche 1 bis 6, worin der modifizierte Y-Zeolith eine Wasseraufnahmekapazität von 8 bis 10 Gew.-% des modifizierten Zeolithen aufweist.

8. Zusammensetzung nach einem der Ansprüche 1 bis 7, worin der modifizierte Y-Zeolith ein SiO₂/Al₂O₃-Molverhältnis von 4 bis 25 aufweist.

9. Katalysatorzusammensetzung, enthaltend eine Stoffzusammensetzung gemäß einem der Ansprüche 1 bis 8 und mindestens eine Hydrierkomponente eines Metalls der Gruppe VIB und/oder mindestens eine Hydrierkomponente eines Metalls der Gruppe VIII.

10. Katalysatorzusammensetzung nach Anspruch 9, wobei die Hydrierkomponente eine oder mehrere Nickel- und/oder Cobaltkomponenten sowie eine oder mehrere Molybdän- und/oder Wolframkomponenten oder eine oder mehrere Platin- und/oder Palladiumkomponenten enthält.

11. Verfahren zur Umwandlung von Kohlenwasserstoffölen zu Produkten mit niedrigerem mittlerem Molekulargewicht und niedrigerem mittlerem Siedepunkt, bei dem man ein Kohlenwasserstofföl bei erhöhter Temperatur und erhöhtem Druck in Gegenwart einer Katalysatorzusammensetzung nach Anspruch 9 oder 10 mit Wasserstoff in Berührung bringt.

12. Verfahren nach Anspruch 11, das man bei einer Temperatur im Bereich von 250°C bis 500°C, einem Wasserstoffpartialdruck von bis zu 300 bar und einer Belastung von 0,1 bis 10 kg Einsatz pro Liter Katalysator pro Stunde durchführt.

## Revendications

1. Composition de matière convenant comme base de catalyseur dans l'hydrotraitement, comprenant un aluminosilicate cristallin du type zéolite Y, qui comprend une zéolite Y modifiée possédant un calibre de cellule unitaire inférieur à 2,437 nm, un pouvoir d'adsorption d'eau (à 25°C et une valeur p/pₒ de 0,2) d'au moins 8% en poids de zéolite modifiée et un volume des pores d'au moins 0,25 ml/g, où entre 10% et 60% du volume total des pores sont constitués de pores qui possèdent un diamètre d'au moins 8 nm; un liant du type oxyde inorganique choisi parmi l'alumine, la silice, la magnésie, l'oxyde de titane, des argiles, la zircone, la silice-zircone et la silice-oxyde de bore; et une dispersion de silice-alumine dans une matrice d'alumine; où la composition comprend moins de 25% en poids de la zéolite Y, plus de 25% en poids de liant et au moins 30% en poids de la dispersion.

2. Composition suivant la revendication 1, caractérisée en ce qu'elle comprend au moins 30% en poids de liant.

3. Composition suivant la revendication 1 ou 2, caractérisée en ce qu'elle comprend moins de 15% en poids de la zéolite Y.

4. Composition suivant la revendication 3, caractérisée en ce qu'elle possède un rapport pondéral liant/zéolite Y de 2 à 40.

5. Composition suivant l'une quelconque des revendications 1 à 4, caractérisée en ce que de 10% à 40% du volume total des pores de la zéolite Y modifiée sont constitués de pores possédant un diamètre d'au moins 8 nm.

6. Composition suivant l'une quelconque des revendications 1 à 5, caractérisée en ce que la zéolite Y modifiée possède un calibre de cellule unitaire inférieur à 2,435 nm.

7. Composition suivant l'une quelconque des revendications 1 à 6, caractérisée en ce que la zéolite Y modifiée possède un pouvoir d'adsorption d'eau de 8 à 10% en poids de la zéolite modifiée.

8. Composition suivant l'une quelconque des revendications 1 à 7, caractérisée en ce que la zéolite Y modifiée possède un rapport molaire SiO₂/Al₂O₃ de 4 à 25.

9. Composition catalytique comprenant une composition de matière suivant l'une quelconque des revendications 1 à 8 et au moins un composant d'hydrogénation d'un métal du groupe VIB et/ou au moins un composant d'hydrogénation d'un métal du groupe VIII.

10. Composition catalytique suivant la revendication 9, caractérisée en ce que le composant d'hydrogénation comprend un ou plusieurs composants de nickel et/ou de cobalt et un ou plusieurs composants de molybdène et/ou de tungstène, ou un ou plusieurs composants de platine et/ou de palladium.

11. Procédé de conversion d'huiles hydrocarbonées en produits de poids moléculaires moyens inférieurs et de points d'ébullition moyens inférieurs, comprenant la mise en contact d'une huile hydrocarbonée à température et à pression élevées avec de l'hydrogène en présence d'un composition catalytique suivant la revendication 9 ou 10.

12. Procédé suivant la revendication 11, caractérisé en ce qu'on l'entreprend à une température qui varie de 250°C à 500°C, une pression partielle d'hydrogène s'élevant jusqu'à 300 bars et une vitesse spatiale entre 0,1 et 10 kg de charge par litre de catalyseur et par heure.
